# EUROPEAN PATENT APPLICATION

(11) **EP 4 325 813 A1**
(43) Date of publication of application: **21.02.2024**
(21) Application number: 22807627.9
(22) Date of filing: 12.04.2022
(51) Int. Cl.: H04L 67/12, H04L 67/51, H04W 4/70, G06N 20/00

(54) **METHOD AND APPARATUS FOR ENABLING ARTIFICIAL INTELLIGENCE SERVICE IN M2M SYSTEM**

(30) Priority: 10.05.2021 US 202163186436 P
(71) Applicant: HYUNDAI MOTOR COMPANY, Seoul 06797 (KR); Kia Corporation, Seocho-gu Seoul 06797 (KR); Industry Academy Cooperation Foundation Of Sejong University, Seoul 05006 (KR)
(72) Inventor: SONG, Jae Seung, Seoul 05006 (KR)
(74) Representative: Isarpatent
(86) International application number: PCT/KR2022/005297
(87) International publication number: WO 2022/239979

(57) **Abstract**

The present disclosure is directed to enable an artificial intelligence (AI) service in a machine-to-machine (M2M) system, and a method for operating a first device may include transmitting a first message for requesting to generate a resource associated with training of an artificial intelligence model to a second device, transmitting a second message for requesting to perform the training based on the resource to the second device, receiving a third message for notifying completion of the training of the artificial intelligence model from the second device, and performing a predicting operation using the trained artificial intelligence model.

## Description

### BACKGROUND

### (a) Technical Field

The present disclosure relates to a machine-to-machine (M2M) system, more particularly, to a method and apparatus for enabling an artificial intelligence (AI) service in an M2M system.

### (b) Description of the Related Art

Recently, Machine-to-Machine (M2M) systems have been introduced. An M2M communication may refer to a communication performed between machines without human intervention. M2M includes Machine Type Communication (MTC), Internet of Things (IoT) or Device-to-Device (D2D). In the following description, the term "M2M" is uniformly used for convenience of explanation, but the present disclosure is not limited thereto. A terminal used for M2M communication may be an M2M terminal or an M2M device. An M2M terminal may generally be a device having low mobility while transmitting a small amount of data. Herein, the M2M terminal may be used in connection with an M2M server that centrally stores and manages inter-machine communication information. In addition, an M2M terminal may be applied to various systems such as object tracking, automobile linkage, and power metering.

Meanwhile, with respect to an M2M terminal, the oneM2M standardization organization provides requirements for M2M communication, things to things communication and IoT technology, and technologies for architecture, Application Program Interface (API) specifications, security solutions and interoperability. The specifications of the oneM2M standardization organization provide a framework to support a variety of applications and services such as smart cities, smart grids, connected cars, home automation, security and health.

### SUMMARY

The present disclosure is directed to a method and apparatus for enabling an artificial intelligence (AI) service in a machine-to-machine (M2M) system.

The present disclosure is directed to a method and apparatus for managing data necessary to train an artificial intelligence model in an M2M system.

The present disclosure is directed to a method and apparatus for providing a resource for managing information necessary to train an artificial intelligence model in an M2M system.

According to one embodiment of the present disclosure, a method for operating a first device in a machine-to-machine (M2M) system may include transmitting a first message for requesting to generate a resource associated with training of an artificial intelligence model to a second device, transmitting a second message for requesting to perform the training based on the resource to the second device, receiving a third message for notifying completion of the training of the artificial intelligence model from the second device, and performing a predicting operation using the trained artificial intelligence model.

According to one embodiment of the present disclosure, a method for operating a second device in a machine-to-machine (M2M) system may include receiving a first message for requesting to generate a resource associated with training of an artificial intelligence model from a first device, receiving a second message for requesting to perform the training based on the resource from the first device, transmitting a third message for requesting to build the artificial intelligence model to the third device, and assisting a predicting operation using the artificial intelligence model.

According to one embodiment of the present disclosure, a method for operating a third device in a machine-to-machine (M2M) system may include receiving a first message for requesting to build an artificial intelligence model to be used in a first device from a second device, generating the artificial intelligence model, performing training for the artificial intelligence model, and transmitting a second message including information on the trained artificial intelligence model to the second device.

According to one embodiment of the present disclosure, a first device in a machine-to-machine (M2M) system may include a transceiver and a processor coupled with the transceiver. The processor may be configured to send a first message for requesting to generate a resource associated with training of an artificial intelligence model to a second device, send a second message for requesting to perform the training based on the resource to the second device, receive a third message for notifying completion of the training of the artificial intelligence model from the second device, and perform a predicting operation using the trained artificial intelligence model.

According to one embodiment of the present disclosure, a second device in a machine-to-machine (M2M) system may include a transceiver and a processor coupled with the transceiver. The processor may be configured to receive a first message for requesting to generate a resource associated with training of an artificial intelligence model from a first device, receive a second message for requesting to perform the training based on the resource from the first device, send a third message for requesting to build the artificial intelligence model to a third device, and assisting a predicting operation using the artificial intelligence model.

According to one embodiment of the present disclosure, a third device in a machine-to-machine (M2M) system may include a transceiver and a processor coupled with the transceiver. The processor may be configured to receive a first message for requesting to build an artificial intelligence model to be used in a first device from a second device, generate the artificial intelligence model, perform training for the artificial intelligence model, and send a second message including information on the trained artificial intelligence model to the second device.

According to the present disclosure, an artificial intelligence (AI) service may be effectively provided in a machine-to-machine (M2M) system.

Effects obtained in the present disclosure are not limited to the above-mentioned effects, and other effects not mentioned above may be clearly understood by those skilled in the art from the following description.

### BRIEF DESCRIPTION OF THE DRAWINGS

FIG. 1 illustrates a layered structure of a machine-to-machine (M2M) system according to the present disclosure.
FIG. 2 illustrates a reference point in an M2M system according to the present disclosure.
FIG. 3 illustrates each node in an M2M system according to the present disclosure.
FIG. 4 illustrates a common service function in an M2M system according to the present disclosure.
FIG. 5 illustrates a method in which an originator and a receiver exchange a message in an M2M system according to the present disclosure.
FIG. 6 illustrates examples of types of datasets used for an artificial intelligence model in an M2M system according to the present disclosure.
FIG. 7 illustrates an example of a procedure of triggering training for an artificial intelligence model in an M2M system according to the present disclosure.
FIG. 8 illustrates an example of a procedure of managing a resource associated with training of an artificial intelligence model in an M2M system according to the present disclosure.
FIG. 9 illustrates an example of a procedure of performing training for an artificial intelligence model in an M2M system according to the present disclosure.
FIG. 10 illustrates an example of a resource associated with training of an artificial intelligence model in an M2M system according to the present disclosure.
FIG. 11 illustrates an example of a procedure of building an artificial intelligence model in an M2M system according to the present disclosure.
FIG. 12 illustrates a configuration of an M2M device in an M2M system according to the present disclosure.
FIG. 13 illustrates a fault detection scenario using an artificial intelligence model in an M2M system according to the present disclosure.
FIG. 14 illustrates a pattern detection scenario from a video in an M2M system according to the present disclosure.
FIG. 15 illustrates a language based sentiment classification scenario in an M2M system according to the present disclosure.
FIG. 16 illustrates an image classification and augmentation scenario in an M2M system according to the present disclosure.

### DETAILED DESCRIPTION

Hereinafter, embodiments of the present disclosure will be described in detail with reference to the accompanying drawings, which will be easily implemented by those skilled in the art. However, the present disclosure may be embodied in many different forms and is not limited to the exemplary embodiments described herein.

In the present disclosure, the terms first, second, etc. are used only for the purpose of distinguishing one component from another, and do not limit the order or importance of components, etc. unless specifically stated otherwise. Thus, within the scope of this disclosure, a first component in one embodiment may be referred to as a second component in another embodiment, and similarly a second component in one embodiment may be referred to as a first component.

In the present disclosure, when a component is referred to as being "linked", "coupled", or "connected" to another component, it is understood that not only a direct connection relationship but also an indirect connection relationship through an intermediate component may also be included. Also, when a component is referred to as "comprising" or "having" another component, it may mean further inclusion of another component not the exclusion thereof, unless explicitly described to the contrary.

In the present disclosure, components that are distinguished from each other are intended to clearly illustrate each feature. However, it does not necessarily mean that the components are separate. In other words, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. Also, exemplary embodiments that include other components in addition to the components described in the various exemplary embodiments are also included in the scope of the present disclosure.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor and is specifically programmed to execute the processes described herein. The memory is configured to store the modules and the processor is specifically configured to execute said modules to perform one or more processes which are described further below.

In addition, the present specification describes a network based on Machine-to-Machine (M2M) communication, and a work in M2M communication network may be performed in a process of network control and data transmission in a system managing the communication network. In the present specification, an M2M terminal may be a terminal performing M2M communication. However, in consideration of backward compatibility, it may be a terminal operating in a wireless communication system. In other words, an M2M terminal may refer to a terminal operating based on M2M communication network but is not limited thereto. An M2M terminal may operate based on another wireless communication network and is not limited to the exemplary embodiment described above.

In addition, an M2M terminal may be fixed or have mobility. An M2M server refers to a server for M2M communication and may be a fixed station or a mobile station. In the present specification, an entity may refer to hardware like M2M device, M2M gateway and M2M server. In addition, for example, an entity may be used to refer to software configuration in a layered structure of M2M system and is not limited to the embodiment described above.

In addition, for example, the present disclosure mainly describes an M2M system but is not solely applied thereto. In addition, an M2M server may be a server that performs communication with an M2M terminal or another M2M server. In addition, an M2M gateway may be a connection point between an M2M terminal and an M2M server. For example, when an M2M terminal and an M2M server have different networks, the M2M terminal and the M2M server may be connected to each other through an M2M gateway. Herein, for example, both an M2M gateway and an M2M server may be M2M terminals and are not limited to the embodiment described above.

The present disclosure relates to a method and apparatus for enabling an artificial intelligence (AI) service in a machine-to-machine (M2M) system. More particularly, the present disclosure describes a technology of managing information associated with training of an artificial intelligence model in an M2M system.

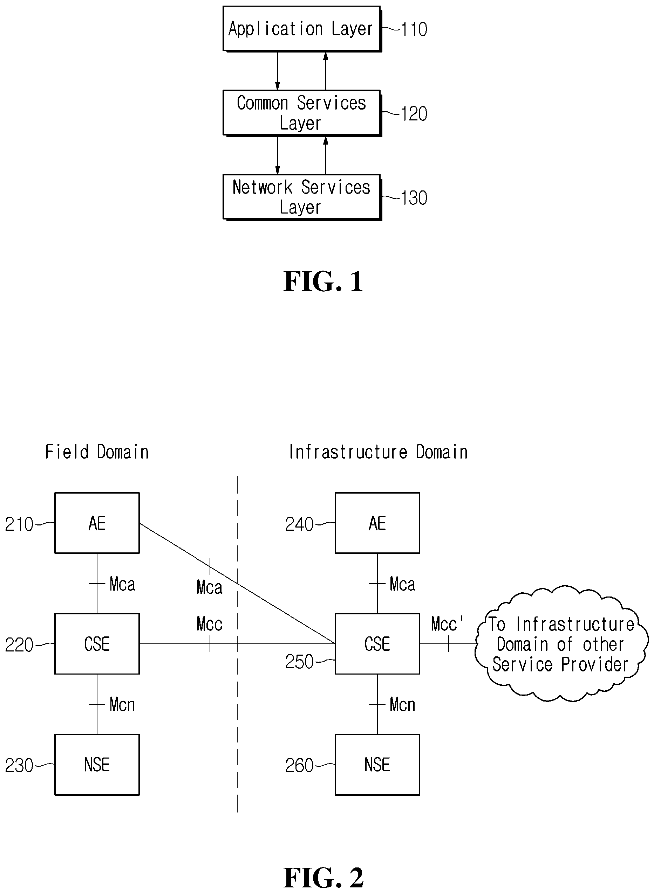

oneM2M is a de facto standards organization that was founded to develop a communal IoT service platform sharing and integrating application service infrastructure (platform) environments beyond fragmented service platform development structures limited to separate industries like energy, transportation, national defense and public service.oneM2M aims to render requirements for things to things communication and IoT technology, architectures, Application Program Interface (API) specifications, security solutions and interoperability. For example, the specifications of oneM2M provide a framework to support a variety of applications and services such as smart cities, smart grids, connected cars, home automation, security and health. In this regard, oneM2M has developed a set of standards defining a single horizontal platform for data exchange and sharing among all the applications. Applications across different industrial sections may also be considered by oneM2M. Like an operating system, oneM2M provides a framework connecting different technologies, thereby creating distributed software layers facilitating unification. Distributed software layers are implemented in a common services layer between M2M applications and communication Hardware/Software (HW/SW) rendering data transmission. For example, a common services layer may be a part of a layered structure illustrated in FIG. 1.

FIG. 1 is a view illustrating a layered structure of a Machine-to-Machine (M2M) system according to the present disclosure. Referring to FIG. 1, a layered structure of an M2M system may include an application layer 110, a common services layer 120 and a network services layer 130. Herein, the application layer 110 may be a layer operating based on a specific application. For example, an application may be a fleet tracking application, a remote blood sugar monitoring application, a power metering application or a controlling application. In other words, an application layer may be a layer for a specific application. Herein, an entity operating based on an application layer may be an application entity (AE).

The common services layer 120 may be a layer for a common service function (CSF). For example, the common services layer 120 may be a layer for providing common services like data management, device management, M2M service subscription management and location service. For example, an entity operating based on the common services layer 120 may be a common service entity (CSE).

The common services layer 120 may provide a set of services that are grouped into CSFs according to functions. A multiplicity of instantiated CSFs constitutes CSEs. CSEs may interface with applications (for example, application entities or AEs in the terminology of oneM2M), other CSEs and base networks (for example, network service entities or NSEs in the terminology of oneM2M). The network services layer 130 may provide the common services layer 120 with services such as device management, location service and device triggering. Herein, an entity operating based on the network layer 120 may be a network service entity (NSE).

FIG. 2 is a view illustrating reference points in an M2M system according to the present disclosure. Referring to FIG. 2, an M2M system structure may be distinguished into a field domain and an infrastructure domain. Herein, in each domain, each of the entities may perform communication through a reference point (for example, Mca or Mcc). For example, a reference point may indicate a communication flow between each entity. In particular, referring to FIG. 2, the reference point Mca between AE 210 or 240 and CSE 220 or 250, the reference point Mcc between different CSEs and Mcn reference point between CSE 220 or 250 and NSE 230 or 260 may be set.

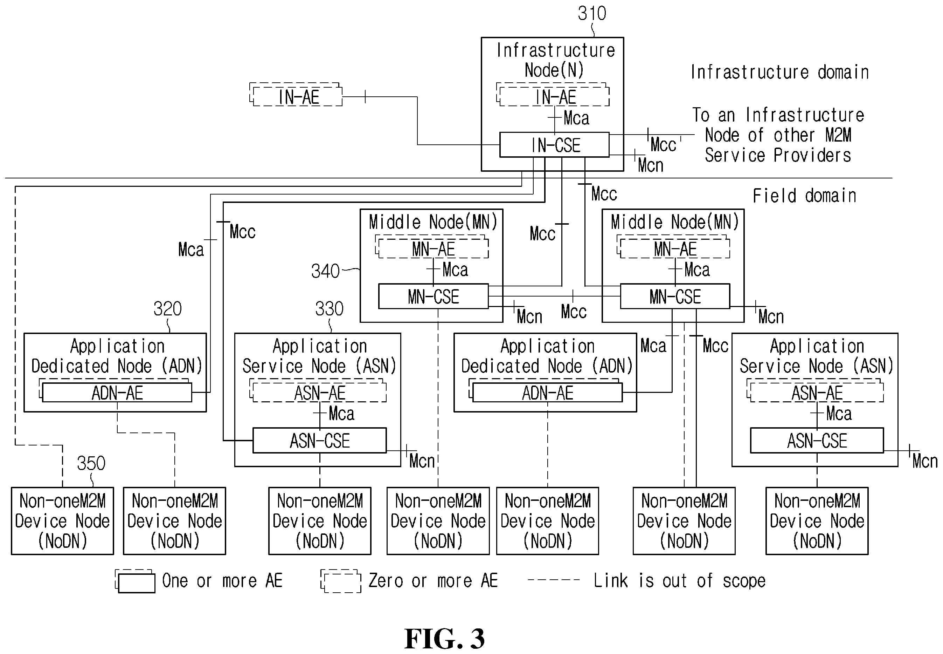

FIG. 3 is a view illustrating each node in an M2M system according to the present disclosure. Referring to FIG. 3, an infrastructure domain of a specific M2M service provider may provide a specific infrastructure node (IN) 310. Herein, the CSE of the IN may be configured to perform communication based on the AE and the reference point Mca of another infrastructure node. In particular, one IN may be set for each M2M service provider. In other words, the IN may be a node that performs communication with the M2M terminal of another infrastructure based on an infrastructure structure. In addition, for example, conceptually, a node may be a logical entity or a software configuration.

Next, an application dedicated node (ADN) 320 may be a node including at least one AE but not CSE. In particular, an ADN may be set in the field domain. In other words, an ADN may be a dedicated node for AE. For example, an ADN may be a node that is set in an M2M terminal in hardware. In addition, the application service node (ASN) 330 may be a node including one CSE and at least one AE. ASN may be set in the field domain. In other words, it may be a node including AE and CSE. In particular, an ASN may be a node connected to an IN. For example, an ASN may be a node that is set in an M2M terminal in hardware.

In addition, a middle node (MN) 340 may be a node including a CSE and including zero or more AEs. In particular, the MN may be set in the field domain. An MN may be connected to another MN or IN based on a reference point. In addition, for example, an MN may be set in an M2M gateway in hardware. As an example, a non-M2M terminal node 350 (Non-M2M device node, NoDN) is a node that does not include M2M entities. It may be a node that performs management or collaboration together with an M2M system.

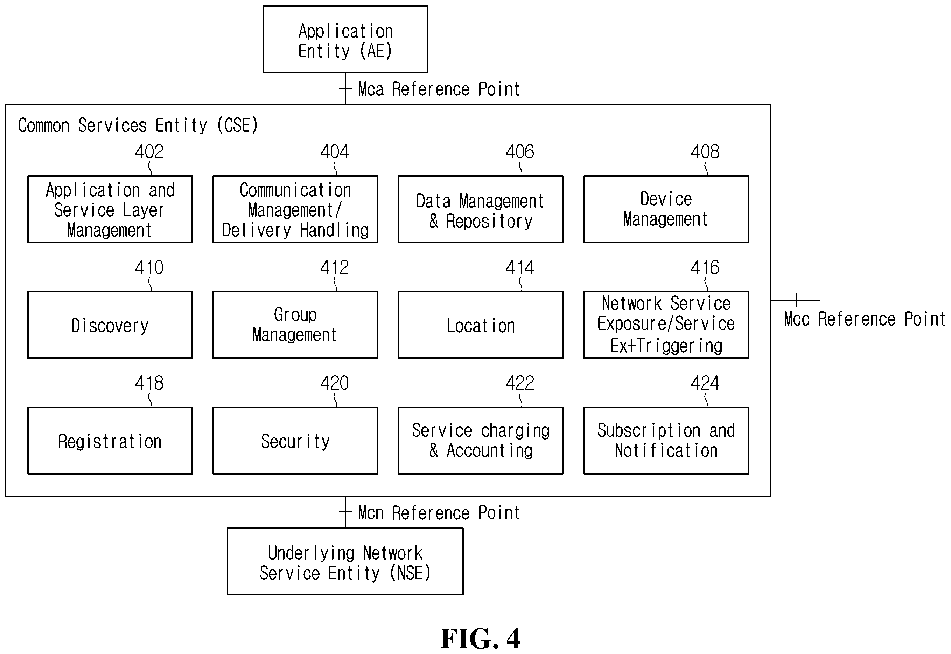

FIG. 4 is a view illustrating a common service function in an M2M system according to the present disclosure. Referring to FIG. 4, common service functions may be provided. For example, a common service entity may provide at least one or more CSFs among application and service layer management 402, communication management and delivery handling 404, data management and repository 406, device management 408, discovery 410, group management 412, location 414, network service exposure/service execution and triggering 416, registration 418, security 420, service charging and accounting 422, service session management and subscription/notification 424. At this time, M2M terminals may operate based on a common service function. In addition, a common service function may be possible in other embodiments and is not limited to the above-described exemplary embodiment.

The application and service layer management 402 CSF provides management of AEs and CSEs. The application and service layer management 402 CSF includes not only the configuring, problem solving and upgrading of CSE functions but also the capability of upgrading AEs. The communication management and delivery handling 404 CSF provides communications with other CSEs, AEs and NSEs. The communication management and delivery handling 404 CSF are configured to determine at what time and through what connection communications are to be delivered, and also determine to buffer communication requests to deliver the communications later, if necessary and permitted.

The data management and repository 406 CSF provides data storage and transmission functions (for example, data collection for aggregation, data reformatting, and data storage for analysis and sematic processing). The device management 408 CSF provides the management of device capabilities in M2M gateways and M2M devices.

The discovery 410 CSF is configured to provide an information retrieval function for applications and services based on filter criteria. The group management 412 CSF provides processing of group-related requests. The group management 412 CSF enables an M2M system to support bulk operations for many devices and applications. The location 414 CSF is configured to enable AEs to obtain geographical location information.

The network service exposure/service execution and triggering 416 CSF manages communications with base networks for access to network service functions. The registration 418 CSF is configured to provide AEs (or other remote CSEs) to a CSE. The registration 418 CSF allows AEs (or remote CSE) to use services of CSE. The security 420 CSF is configured to provide a service layer with security functions like access control including identification, authentication and permission. The service charging and accounting 422 CSF is configured to provide charging functions for a service layer. The subscription/notification 424 CSF is configured to allow subscription to an event and notifying the occurrence of the event.

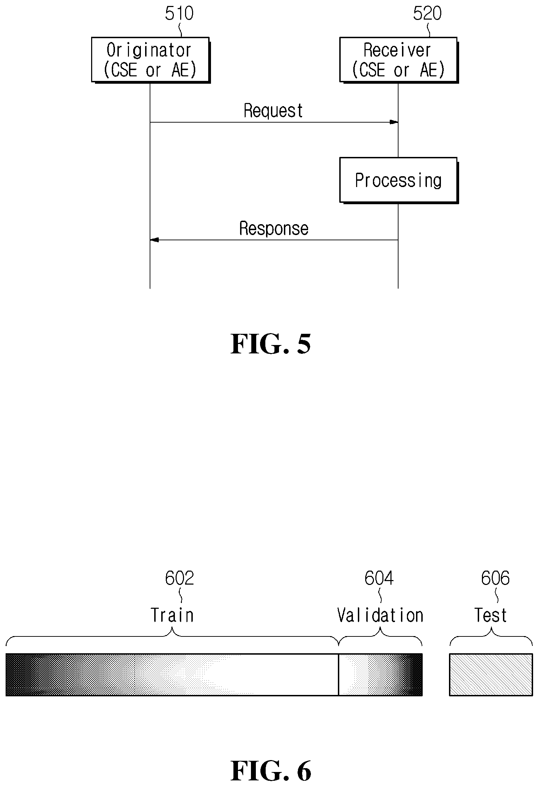

FIG. 5 is a view illustrating that an originator and a receiver exchange a message in an M2M system according to the present disclosure. Referring to FIG. 5, the originator 501 may be configured to transmit a request message to the receiver 520. In particular, the originator 510 and the receiver 520 may be the above-described M2M terminals. However, the originator 510 and the receiver 520 are not limited to M2M terminals but may be other terminals. They are not limited to the above-described exemplary embodiment. In addition, for example, the originator 510 and the receiver 520 may be nodes, entities, servers or gateways, which are described above. In other words, the originator 510 and the receiver 520 may be hardware or software configurations and are not limited to the above-described embodiment.

Herein, for example, a request message transmitted by the originator 510 may include at least one parameter. Additionally, a parameter may be a mandatory parameter or an optional parameter. For example, a parameter related to a transmission terminal, a parameter related to a receiving terminal, an identification parameter and an operation parameter may be mandatory parameters. In addition, optional parameters may be related to other types of information. In particular, a transmission terminal-related parameter may be a parameter for the originator 510. In addition, a receiving terminal-related parameter may be a parameter for the receiver 520. An identification parameter may be a parameter required for identification of each other.

Further, an operation parameter may be a parameter for distinguishing operations. For example, an operation parameter may be set to any one among Create, Retrieve, Update, Delete and Notify. In other words, the parameter may aim to distinguish operations. In response to receiving a request message from the originator 510, the receiver 520 may be configured to process the message. For example, the receiver 520 may be configured to perform an operation included in a request message. For the operation, the receiver 520 may be configured to determine whether a parameter is valid and authorized. In particular, in response to determining that a parameter is valid and authorized, the receiver 520 may be configured to check whether there is a requested resource and perform processing accordingly.

For example, in case an event occurs, the originator 510 may be configured to transmit a request message including a parameter for notification to the receiver 520. The receiver 520 may be configured to check a parameter for a notification included in a request message and may perform an operation accordingly. The receiver 520 may be configured to transmit a response message to the originator 510.

A message exchange process using a request message and a response message, as illustrated in FIG. 5, may be performed between AE and CSE based on the reference point Mca or between CSEs based on the reference point Mcc. In other words, the originator 510 may be AE or CSE, and the receiver 520 may be AE or CSE. According to an operation in a request message, such a message exchange process as illustrated in FIG. 5 may be initiated by either AE or CSE.

A request from a requestor to a receiver through the reference points Mca and Mcc may include at least one mandatory parameter and at least one optional parameter. In other words, each defined parameter may be either mandatory or optional according to a requested operation. For example, a response message may include at least one parameter among those listed in Table 1 below.

**Table 1**

| Response message parameter/success or not |
|---|
| Response Status Code - successful, unsuccessful, ack |
| Request Identifier - uniquely identifies a Request message |
| Content - to be transferred |
| To - the identifier of the Originator or the Transit CSE that sent the corresponding non-blocking request |
| From - the identifier of the Receiver |
| Originating Timestamp - when the message was built |
| Result Expiration Timestamp - when the message expires |
| Event Category - what event category shall be used for the response message |
| Content Status |
| Content Offset |
| Token Request Information |
| Assigned Token Identifiers |
| Authorization Signature Request Information |
| Release Version Indicator - the oneM2M release version that this response message conforms to |

A filter criteria condition, which can be used in a request message or a response message, may be defined as in Table 2 and Table 3 below.

**Table 2**

| Condition tag | Multiplicity | Description |
|---|---|---|
| Matching Conditions | | |
| createdBefore | 0..1 | The creationTime attribute of the matched resource is chronologically before the specified value. |
| createdAfter | 0..1 | The creationTime attribute of the matched resource is chronologically after the specified value. |
| modifiedSince | 0..1 | The lastModifiedTime attribute of the matched resource is chronologically after the specified value. |
| unmodifiedSince | 0..1 | The lastModifiedTime attribute of the matched resource is chronologically before the specified value. |
| stateTagSmaller | 0..1 | The stateTag attribute of the matched resource is smaller than the specified value. |
| stateTagBigger | 0..1 | The stateTag attribute of the matched resource is bigger than the specified value. |
| expireBefore | 0..1 | The expirationTime attribute of the matched resource is chronologically before the specified value. |
| expire After | 0..1 | The expirationTime attribute of the matched resource is chronologically after the specified value. |
| labels | 0..1 | The labels attribute of the matched resource matches the specified value. |
| labels Query | 0..1 | The value is an expression for the filtering of labels attribute of resource when it is of key-value pair format. The expression is about the relationship between label-key and label-value which may include equal to or not equal to, within or not within a specified set etc. For example, label-key equals to label value, or label-key within {label-value1, label-value2}. Details are defined in [3] |
| childLabels | 0..1 | A child of the matched resource has labels attributes matching the specified value. The evaluation is the same as for the labels attribute above. Details are defined in [3]. |
| parentLabels | 0..1 | The parent of the matched resource has labels attributes matching the specified value. The evaluation is the same as for the labels attribute above. Details are defined in [3]. |
| resourceType | O..n | The resourceType attribute of the matched resource is the same as the specified value. It also allows differentiating between normal and announced resources. |
| childResourceType | O..n | A child of the matched resource has the resource Type attribute the same as the specified value. |
| parentResourceType | 0..1 | The parent of the matched resource has the resourceType attribute the same as the specified value. |
| sizeAbove | 0..1 | The contentSize attribute of the <contentInstance> matched resource is equal to or greater than the specified value. |
| sizeBelow | 0..1 | The contentSize attribute of the <contentInstance> matched resource is smaller than the specified value. |
| contentType | O..n | The contentlnfo attribute of the <contentInstance> matched resource matches the specified value. |
| attribute | O..n | This is an attribute of resource types (clause 9.6). Therefore, a real tag name is variable and depends on its usage and the value of the attribute can have wild card *. E.g. creator of container resource type can be used as a filter criteria tag as "creator=Sam", "creator=Sam*", "creator=*Sam". |
| childAttribute | O..n | A child of the matched resource meets the condition provided. The evaluation of this condition is similar to the attribute matching condition above. |
| parentAttribute | O..n | The parent of the matched resource meets the condition provided. The evaluation of this condition is similar to the attribute matching condition above. |
| semanticsFilter | O..n | Both semantic resource discovery and semantic query use semanticsFilter to specify a query statement that shall be specified in the SPARQL query language [5]. When a CSE receives a RETRIEVE request including a semanticsFilter, and the Semantic Query Indicator parameter is also present in the request, the request shall be processed as a semantic query; otherwise, the request shall be processed as a semantic resource discovery. |
| | | In the case of semantic resource discovery targeting a specific resource, if the semantic description contained in the <semanticDescriptor> of a child resource matches the semanticFilter, the URI of this child resource will be included in the semantic resource discovery result. |
| | | In the case of semantic query, given a received semantic query request and its query scope, the SPARQL query statement shall be executed over aggregated semantic information collected from the semantic resource(s) in the query scope and the produced output will be the result of this semantic query. |
| | | Examples for matching semantic filters in SPARQL to semantic descriptions can be found in [i.28]. |
| filterOperation | 0..1 | Indicates the logical operation (AND/OR) to be used for different condition tags. The default value is logical AND. |
| contentFilterS vntax | 0..1 | Indicates the Identifier for svntax to be applied for content-based discovery. |
| contentFilterQuery | 0..1 | The query string shall be specified when contentFilterSyntax parameter is present. |

**Table 3**

| Condition tag | Multiplicity | Description |
|---|---|---|
| Filter Handling Conditions | | |
| filterUsage | 0..1 | Indicates how the filter criteria is used. If provided, possible values are 'discovery' and 'IPEOnDemandDiscovery'. If this parameter is not provided, the Retrieve operation is a generic retrieve operation and the content of the child resources fitting the filter criteria is returned. |
| | | If filterUsage is 'discovery', the Retrieve operation is for resource discovery (clause 10.2.6), i.e. only the addresses of the child resources are returned. If filterUsage is 'IPEOnDemandDiscovery', the other filter conditions are sent to the IPE as well as the discovery Originator ID. When the IPE successfully generates new resources matching with the conditions, then the resource address(es) shall be returned. This value shall only be valid for the Retrieve request targeting an <AE> resource that represents the IPE. |
| limit | 0..1 | The maximum number of resources to be included in the filtering result. This may be modified by the Hosting CSE. When it is modified, then the new value shall be smaller than the suggested value bv the Originator. |
| level | 0..1 | The maximum level of resource tree that the Hosting CSE shall perform the operation starting from the target resource (i.e. To parameter). This shall only be applied for Retrieve operation. The level of the target resource itself is zero and the level of the direct children of the target is one. |
| offset | 0..1 | The number of direct child and descendant resources that a Hosting CSE shall skip over and not include within a Retrieve response when processing a Retrieve request to a targeted resource. |
| applyRelativePath | 0..1 | This attribute contains a resource tree relative path (e.g.../tempContainer/LATEST). This condition applies after all the matching conditions have been used (i.e. a matching result has been obtained). The attribute determines the set of resource(s) in the final filtering result. The filtering result is computed by appending the relative path to the path(s) in the matching result. All resources whose Resource-IDs match that combined path(s) shall be returned in the filtering result. If the relative path does not represent a valid resource, the outcome is the same as if no match was found, i.e. there is no corresponding entry in the filtering result. |

A response to a request for accessing a resource through the reference points Mca and Mcc may include at least one mandatory parameter and at least one optional parameter. In other words, each defined parameter may be either mandatory or optional according to a requested operation or a mandatory response code. For example, a request message may include at least one parameter among those listed in Table 4 below.

**Table 4**

| Request message parameter | |
|---|---|
| Mandatory | Operation - operation to be executed / CREAT, Retrieve, Update, Delete, Notify |
| | To - the address of the target resource on the target CSE |
| | From - the identifier of the message Originator |
| | Request Identifier - uniquely identifies a Request message |
| Operation dependent | Content - to be transferred |
| | Resource Type - of resource to be created |
| Optional | Originating Timestamp - when the message was built |
| | Request Expiration Timestamp - when the request message expires |
| | Result Expiration Timestamp - when the result message expires |
| | Operational Execution Time - the time when the specified operation is to be executed by the target CSE |
| | Response Type - type of response that shall be sent to the Originator |
| | Result Persistence - the duration for which the reference containing the responses is to persist |
| | Result Content - the expected components of the result |
| | Event Category - indicates how and when the system should deliver the message |
| | Delivery Aggregation - aggregation of requests to the same target CSE is to be used |
| | Group Request Identifier - Identifier added to the group request that is to be fanned out to each member of the group |
| | Group Request Target Members-indicates subset of members of a group |
| | Filter Criteria - conditions for filtered retrieve operation |
| | Desired Identifier Result Type - format of resource identifiers returned |
| | Token Request Indicator - indicating that the Originator may attempt Token Request procedure (for Dynamic Authorization) if initiated by the Receiver |
| | Tokens - for use in dynamic authorization |
| | Token IDs - for use in dynamic authorization |
| | Role IDs - for use in role based access control |
| | Local Token IDs - for use in dynamic authorization |
| | Authorization Signature Indicator - for use in Authorization Relationship Mapping |
| | Authorization Signature - for use in Authorization Relationship Mapping |
| | Authorization Relationship Indicator - for use in Authorization Relationship Mapping |
| | Semantic Query Indicator - for use in semantic queries |
| | Release Version Indicator - the oneM2M release version that this request message conforms to. |
| | Vendor Information |

A normal resource includes a complete set of representations of data constituting the base of information to be managed. Unless qualified as either "virtual" or "announced", the resource types in the present document are normal resources. A virtual resource is used to trigger processing and/or a retrieve result. However, a virtual resource does not have a permanent representation in a CSE. An announced resource contains a set of attributes of an original resource. When an original resource changes, an announced resource is automatically updated by the hosting CSE of the original resource. The announced resource contains a link to the original resource. Resource announcement enables resource discovery. An announced resource at a remote CSE may be used to create a child resource at a remote CSE, which is not present as a child of an original resource or is not an announced child thereof.

To support resource announcement, an additional column in a resource template may specify attributes to be announced for inclusion in an associated announced resource type. For each announced <resourceType>, the addition of suffix "Annc" to the original <resourceType> may be used to indicate its associated announced resource type. For example, resource <containerAnnc> may indicate the announced resource type for <container> resource, and <groupAnnc> may indicate the announced resource type for <group> resource.

The artificial intelligence (AI) technology is the ability of a computer program capable of learning and thinking. When associated with a program executing a function that the human intelligence can perform, everything may be treated as an artificial intelligence. The artificial intelligence is often applied to projects of developing systems with the humans' intelligent processing features such as reasoning, discovery of meanings, generalization, learning from experience, or the like.

Meanwhile, machine learning (ML) is a type of artificial intelligence that enables a software application to predict outcomes more accurately without being explicitly programmed. Machine learning algorithms predict new output values using historical data as inputs.

Many artificial intelligence (AI) and machine learning (ML) applications use data collected in IoT platforms to train their models. Depending on the quantity and quality of collected datasets for model training, the performance of AI models are different. An IoT platform including oneM2M is a place holder to collect and manage various data (for example, images, texts, sensory information, and the like). In order to build a good model, it is very important to have a good data management scheme. As AI technologies are now being used in many network systems (for example, communication core networks, smart factory platforms, IoT platforms, and the like), it is desirable to consider providing AI enablement features necessary for IoT platforms. When AI applications use IoT platforms that support proper AI data management, the applications may provide various intelligent services more easily.

Typically, main steps involved in machine learning are known as follows.
1) Collect data: Good-quality data is very important to have a good predictive model.
2) Prepare data: Use collected data to prepare for use in a machine learning training. A dataset is classified into three parts, i.e., train, validate, and test. Data may be augmented to have enough datasets for training.
3) Select a model: There are many models. Some may be suitable for image data, others may be suitable for text. Depending on a situation, a proper model should be selected.
4) Train the model: Use a collected dataset to improve the model.
5) Evaluate: The trained model is evaluated to see whether the model is good or not. The collected dataset is split into three parts, i.e., train, validation and test.
6) Tune parameter: When possible and there is a room for improving a tested model, tune parameters used by the model.
7) Perform prediction: Once a good model is given, the model is now used for prediction.

FIG. 6 illustrates examples of types of datasets used for an artificial intelligence model in an M2M system according to the present disclosure. Referring to FIG. 6, to perform machine learning, three types of datasets may be defined. For example, a training dataset 602, a validation dataset 604, and a test dataset 606 may be defined. Each of the datasets may be described as in Table 5 below.

**[Table 5]**

| Type | Description |
|---|---|
| Training dataset | A data sample used to fit a model |
| Validation dataset | A data sample used to provide an unbiased evaluation of a model fit on a training dataset while tuning model hyperparameters. The evaluation becomes more biased as a technique on the validation dataset is incorporated into a model configuration. |
| Test dataset | A data sample used to provide an unbiased evaluation of a final model fit on a training dataset |

There exist ratios splitting a dataset into the training dataset 602, the validation dataset 604, and the test dataset 606. For example, the ratios may be 70%, 15%, and 15% in the order of the training dataset 602, the validation dataset 604, and the test dataset 606.

The present disclosure proposes an M2M platform for supporting data management for machine learning. To manage data in the M2M platform, information on the following items may be managed.

**[Table 6]**

| Item | Description |
|---|---|
| Classification of datasets for machine learning (ML) | Categories of datasets (for example, train, validation, and test) |
| Ratio of ML dataset | Percentage of each portion of ML dataset |
| Model | Which model an AI application is using |
| Parameter | Parameter required for a selected model |
| Trained model | Result model after training and validation |

When an M2M system supports necessary functions, an AI application may generate a resource(s) to build a model for prediction. According to one embodiment, the M2M platform may possess mode data for training and have data for prediction. According to one embodiment, the M2M platform (for example, AI CSF) knows a list of ML algorithms to be implemented. According to various embodiments, the application may generate a resource for building a model, and the application may trigger the building of the model. In addition, the application may download the trained model and perform prediction.

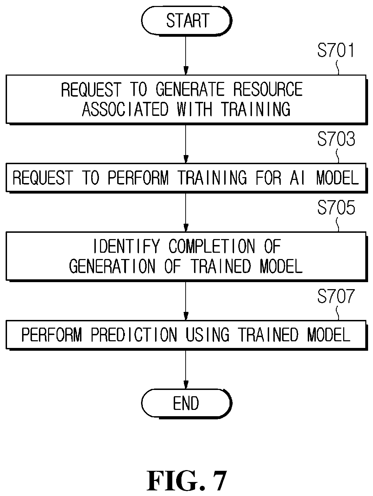

FIG. 7 illustrates an example of a procedure of triggering training for an artificial intelligence model in an M2M system according to the present disclosure. The operation subject of FIG. 7 may be a device in which an application using an artificial intelligence service is executed. Hereinafter, the operation subject of FIG. 7 will be referred to as 'device'.

Referring to FIG. 7, at step S701, the device requests to generate a resource associated with training. The device may request a CSE to generate a resource associated with training of an artificial intelligence model. To this end, the device may send a first request message including information necessary to generate the resource. For example, the first request message may include information indicating the artificial intelligence model or information necessary to specify the artificial intelligence model. The information necessary to specify the artificial intelligence model is included when the artificial intelligence model is selected by the CSE, and for example, it may include at least one of information on an artificial intelligence service to be used and information on the range of use or use environment of the artificial intelligence service.

At step S703, the device requests to perform training for the artificial intelligence model. Performing the training may be requested to the CSE that generates the resource associated with the training. That is, the device may send a second request message for requesting to perform the training for the artificial intelligence model based on the generated resource to the CSE which requests to generate the resource associated with the training of the artificial intelligence model at step S701. According to one embodiment, the second request message may be sent when a predetermined condition is satisfied after the first request message is sent. For example, when it is identified that learning data is secured (for example, notification from the CSE) or a predetermined time has passed since the first request message is sent, the device may send the second request message. According to another embodiment, the first request message and the second request message may be sent at the same time. In this case, the first request message and the second request message may be understood as parts of a single message.

At step S705, the device identifies complete generation of the trained model. The complete generation may be identified by a notification from the CSE which is requested to train. That is, the device may receive, from the CSE, a notification message for notifying that the training of the artificial intelligence model is completed. Accordingly, the device may determine that an artificial intelligence service has become available. For example, the notification message may include at least one of information indicating the completion of training of the artificial intelligence model and information indicating the performance of the trained artificial intelligence model. Herein, the performance of the trained artificial intelligence model may be identified by a test performed after training and validation and be expressed by a probability value such as an error rate.

At step S707, the device performs prediction using the trained model. That is, the device may generate input data through interaction with an external or another device, acquire output data corresponding to the input data, and then analyze the output data. According to one embodiment, the device may directly operate the artificial intelligence model. In this case, the device may receive information on the trained artificial intelligence model and then perform an operation for prediction. According to another embodiment, the device may provide the input data to the CSE and receive the output data.

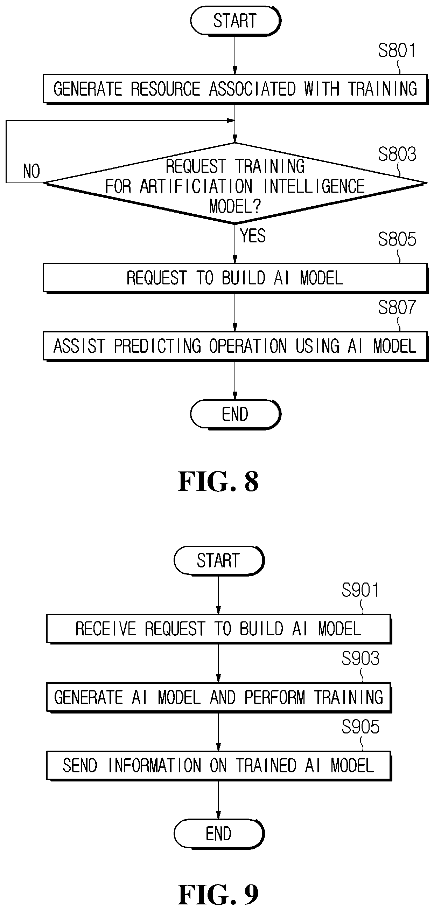

FIG. 8 illustrates an example of a procedure of managing a resource associated with training of an artificial intelligence model in an M2M system according to the present disclosure. The operation subject of FIG. 8 may be a device operating as a CSE that manages a resource associated with an artificial intelligence model. Hereinafter, the operation subject of FIG. 8 will be referred to as 'device'.

Referring to FIG. 8, at step S801, the device generates a resource associated with training. Herein, the resource associated with training may be generated by a request from an AE that wants to use an artificial intelligence service. That is, the device may receive a first request message including information necessary to generate the resource from the AE. For example, the first request message may include information indicating the artificial intelligence model or information necessary to specify the artificial intelligence model. The information necessary to specify the artificial intelligence model is included when the artificial intelligence model is selected by the CSE, and for example, it may include at least one of information on an artificial intelligence service to be used and information on the range of use or use environment of the artificial intelligence service.

At step S803, the device checks whether the training for the artificial intelligence model is requested to be performed. The performing of the training may be requested from an AE that requests to generate the resource associated with the training. That is, the device may check whether a second request message for requesting to perform the training for the artificial intelligence model based on the generated resource is received from the AE which requests to generate the resource associated with the training of the artificial intelligence model at step S801. According to one embodiment, the second request message may be received as a separate message from the first request message. According to another embodiment, the first request message and the second request message may be received at the same time. In this case, the first request message and the second request message may be understood as parts of a single message.

When the training for the artificial intelligence model is requested to be performed, the device requests to build the artificial intelligence mode at step S805. The training of the artificial intelligence model may be performed by a separate device (for example, AI-related CSE). Accordingly, the device may send a third request message for requesting to build the artificial intelligence model, that is, to generate and train the artificial intelligence model. For example, the third request message includes at least one of information indicating the artificial intelligence model and information necessary to train the artificial intelligence model. For example, the information necessary to train the artificial intelligence model may include learning data or information accessible to the learning data.

At step S807, the device assists a predicting operation using the artificial intelligence model. For example, the assisting of the predicting operation may include managing a resource associated with the artificial intelligence model, providing the information on the artificial intelligence model for the predicting operation, performing at least a part of operation for the predicting operation, and the like. Specifically, the device may update values of attributes of the resource based on a training result, notify completion of the training to the AE, and provide information included in the resource according to a request of the AE. In addition, the device may provide information on the artificial intelligence model based on the information included in the resource to the AE. Alternatively, the device may process at least a part of the operation for the predicting operation of the AE based on the information included in the resource.

FIG. 9 illustrates an example of a procedure of performing training for an artificial intelligence model in an M2M system according to the present disclosure. The operation subject of FIG. 9 may be a device operating as a CSF that performs the training for the artificial intelligence model. Hereinafter, the operation subject of FIG. 9 will be referred to as 'device'.

Referring to FIG. 9, at step S901, the device receives a request to build the artificial intelligence model. That is, the device may receive a request message for requesting to build the artificial intelligence model, that is, to generate and train the artificial intelligence model from the CSE that manages a resource associated with the artificial intelligence model. For example, the request message includes at least one of information indicating the artificial intelligence model and information necessary to train the artificial intelligence model. For example, the information necessary to train the artificial intelligence model may include learning data or information accessible to the learning data.

At step S903, the device generates the artificial intelligence model and performs training for the artificial intelligence model. Specifically, the device generates the artificial intelligence model identified by the request message and acquires learning data. For example, the device may acquire the learning data from the request message or acquire the learning data from resources indicated by the request message. The device may classify learning data into a training dataset, a validation dataset, and a test dataset, and perform training, validation, and test using each of the datasets.

At step S905, the device may send information on the trained artificial intelligence model. The device may send the information on the trained artificial intelligence model to the CSE that requests to build the artificial intelligence model. The information on the trained artificial intelligence model may include information on a parameter updated through the training. Herein, the parameter relates to a structure of the artificial intelligence model and may include a hyperparameter (for example, the number of layers) and a configuration parameter (for example, a weight of connection). In other words, the information on the trained artificial intelligence model may include an updated weight value of at least one connection constituting the trained artificial intelligence model.

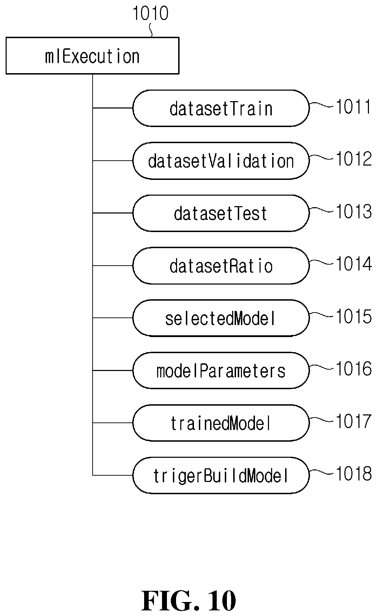

As described above, based on a resource associated with the artificial intelligence model, a plurality of entities (for example, AE, CSE, and CSF) may interact with each other to train the artificial intelligence model. Herein, the resource associated with the artificial intelligence model, that is, the resource associated with training of the artificial intelligence model is used. For example, the resource associated with training of the artificial intelligence model is designed to store information on the artificial intelligence model and information on learning data. According to one embodiment, the resource associated with training of the artificial intelligence model may include at least one of an attribute for information on resources storing learning data for training, an attribute for information on a per-tuple ratio of learning data, an attribute for information on the artificial intelligence model, information on a parameter used in the artificial intelligence model, an attribute for storing the trained artificial intelligence model, and an attribute for information for triggering to build the artificial intelligence model. A concrete example of the resource associated with training of the artificial intelligence model is shown in FIG. 10 below.

FIG. 10 illustrates an example of a resource associated with training of an artificial intelligence model in an M2M system according to the present disclosure. Referring to FIG. 10, a <mlExecution> resource 1010, which is a resource associated with training of an artificial intelligence model, includes a plurality of attributes. The plurality of attributes may include information on data for training, information associated with the artificial intelligence model, and information associated with a training operation. Specifically, the <mlExecution> resource 1010 may include at least one of a datasetTrain attribute 1011, a datasetValidation attribute 1012, a datasetTest attribute 1013, a datasetRatio attribute 1014, a selectedMode attribute 1015, a modelParameters attribute 1016, a trainedModel attribute 1017, and a triggerBuildModel attribute 1018. The meaning of each of the attributes listed below may be described as in Table 7 below.

**[Table 7]**

| Attribute | Description |
|---|---|
| datasetTrain | List of resources storing train data |
| dataset Validation | List of resources storing validation data |

| datasetTest | List of resources for testing a model |
|---|---|
| datasetRatio | Ratio of ML dataset (for example, three tuple of percentage) |
| selectedModel | ML algorithm that represents the model to perform |
| modelParameters | Parameters used by a selected algorithm. Parameters constituting an artificial neural network (for example, the number of layers, the number of perceptrons, a structure of connections, a weight of connection, and the like). As parameter values are different according to algorithms, they need to be managed through a resource. When an algorithm is selected, an IoT platform may perform prediction using parameters stored therein. |
| trainedModel | A result model (for example, executable software) after training and validation |
| triggerBuildModel | A triggering value to start building a model. It is assumed that datasetTrain, datasetValication, datasetTest, dataSetRatio, and selectedModel have proper values. The values are set to indicate whether or not to build a model. |

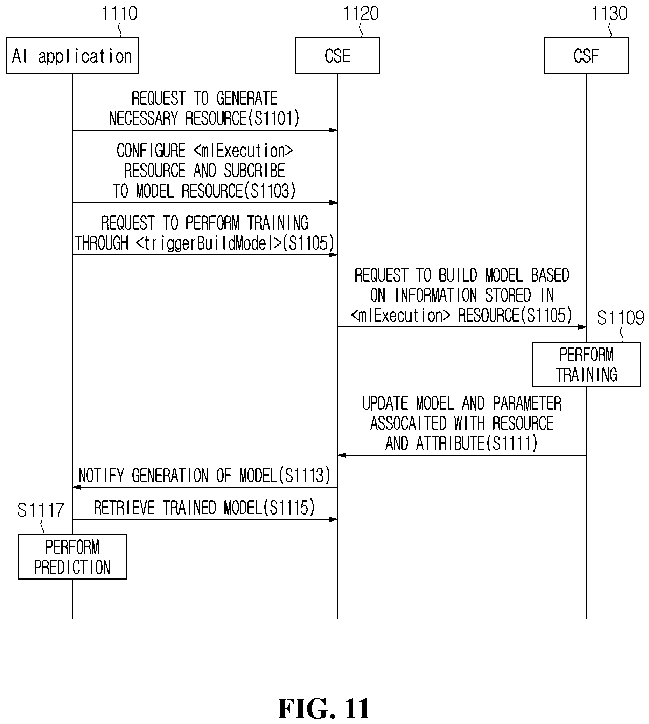

FIG. 11 illustrates an example of a procedure of building an artificial intelligence model in an M2M system according to the present disclosure. FIG. 11 exemplifies signal exchange among an AI application 1110, a CSE 1120, and a CSF 1130. The CSE 1120 may be a server that manages a resource associated with training of an artificial intelligence model, and the CSF 1130 may be an AI-enabled device that performs training for an artificial intelligence model using data in an M2M platform.

Referring to FIG. 11, at step S1101, the AI application 1110 sends a message for requesting to generate a necessary resource to the CSE 1120. That is, the AI application 1110 requests to generate at least one resource that is necessary according to an application to be provided. Herein, the at least one resource may be different according to a type of a provided application. For example, the at least one resource may be associated with a main function of an application, associated with information for assisting the main function, or associated with a policy in an M2M platform.

At step S1103, the AI application 1110 sends a message for requesting a configuration of the <mlExecution> resource and subscription to a model resource. That is, the AI application 1110 requests the CSE 1120 to generate a resource (for example, <mlExecution> resource) necessary to use an artificial intelligence service. Accordingly, the CSE 1120 generates the <mlExecution> resource for the AI application 1110. In addition, the AI application 1110 may subscribe to the generated <mlExecution> resource and then monitor update of an attribute of the <mlExecution> resource.

At step S1105, the AI application 1110 sends a message for requesting to perform training through triggerBuildModel. In other words, the AI application 1110 requests training for an artificial intelligence model associated with the generated <mlExecution> resource. According to one embodiment, the generation of <mlExecution> resource in the CSE 1120 may not be sufficient for an IoT platform to automatically build an artificial intelligence model. That is, the artificial intelligence model starts to be built at a request of the AI application 1110, and the triggerBuildModel attribute is set to a value indicating that the request of the AI application 1110 is present. For example, the triggerBuildModel attribute may be set to 1/0 or True/False.

At step S1107, the CSE 1120 sends a message for requesting to build the artificial intelligence model to the CSF 1130 based on information stored in the <mlExecution> resource. That is, as the triggerBuildModel attribute is set to 1 or True, the CSE 1120 triggers building the artificial intelligence model. To this end, according to one embodiment, the CSE 1120 may collect learning data using information in dataset-related attributes (for example, datasetTrain, datasetValidation, and datasetTest) of the <mlExecution> resource and provide the learning data to the CSF 1130. Alternatively, according to another embodiment, the CSE 1120 may provide the information in the dataset-related attributes to the CSF 1130 so that the CSF 1130 may collect the learning data.

At step S1109, the CSF 1130 performs training for the artificial intelligence model. In other words, the CSF 1130 performs training (for example, train, validation, and test) for the artificial intelligence model associated with the <mlExecution> resource stored in the CSE 1120. Herein, the CSF 1130 may perform training by using learning data provided from the CSE 1120 or collected by the CSF 1130. Through the training, the artificial intelligence model may be fit into the learning data collected through the M2M platform. Thus, at least one parameter (for example, a weight) included in the artificial intelligence model may be optimized.

At step S1111, the CSF 1130 sends information for updating a model and a parameter associated with a resource and an attribute to the CSE 1120. For example, the information for updating the model and the parameter may include parameter values of the artificial intelligence model which are updated through training. The updated parameter values of the artificial intelligence model are information necessary to use the artificial intelligence model and may also be used to configure values of attributes of the <mlExecution> resource. That is, the CSF 1130 sends information (for example, an updated value or a difference value) for updating values of attributes included in the <mlExecution> resource to the CSE 1120. Accordingly, the CSE 1120 may update the value of attributes (for example, modelParameter, trainedModel, and the like) included in the <mlExecution> resource.

At step S1113, the CSE 1120 sends a message for notifying generation of the trained artificial intelligence model to the AI application 1110. Herein, the message for notifying the generation of the model may be a message defined to be sent when the training of the artificial intelligence model based on the <mlExecution> resource is completed. Alternatively, the message for notifying the generation of the model may be a message sent as a response to subscription to the <mlExecution> resource.

At step S1115, the AI application 1110 sends a message for retrieving the trained model to the CSE 1120. In other words, the AI application 1110 requests information on the trained artificial intelligence model to the CSE 1120 and receives the information on the trained artificial intelligence model. Thus, the AI application 1110 may download the trained artificial intelligence model in a form of executable software.

At step S1117, the AI application 1110 performs prediction using the trained artificial intelligence model. That is, the AI application 1110 may generate input data for prediction of the artificial intelligence model and generate output data including a prediction result from the input data by using the artificial intelligence model. Although not shown in FIG. 11, the AI application 1110 may identify the prediction result based on the output data and output the identified prediction result to a user or send the identified prediction result to another device.

In the embodiment described with reference to FIG. 11, the AI application 1110 performs prediction after receiving information on a trained artificial intelligence model from the CSE 1120. According to another embodiment, a predicting operation may be performed by the CSE 1120 according to a request of the AI application 1110. In this case, the step S1115 may be omitted. In addition, step S1 117 may be replaced by an operation of providing input data by the AI application 1110, an operation of performing prediction by the CSE 1120, and giving feedback on output data to the AI application 1110 by the CSE 1120.

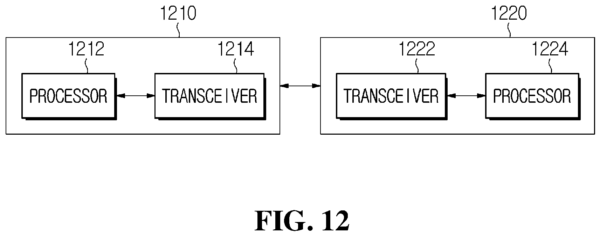

FIG. 12 illustrates a configuration of an M2M device in an M2M system according to the present disclosure. An M2M device 1210 or an M2M device 1220 illustrated in FIG. 12 may be understood as hardware functioning as at least one among the above-described AE, CSE and NSE.

Referring to FIG. 12, the M2M device 1210 may include a processor 1212 controlling a device and a transceiver 1214 transmitting and receiving a signal. Herein, the processor 1212 may control the transceiver 1214. In addition, the M2M device 1210 may communicate with another M2M device 1220. The another M2M device 1220 may also include a processor 1222 and a transceiver 1224, and the processor 1222 and the transceiver 1224 may perform the same function as the processor 1212 and the transceiver 1214.

As an example, the originator, the receiver, AE and CSE, which are described above, may be one of the M2M devices 1210 and 1220 of FIG. 12, respectively. In addition, the devices 1210 and 1220 of FIG. 12 may be other devices. As an example, the devices 1210 and 1220 of FIG. 12 may be communication devices, vehicles, or base stations. That is, the devices 1210 and 1220 of FIG. 12 refer to devices capable of performing communication and are not limited to the above-described embodiment.

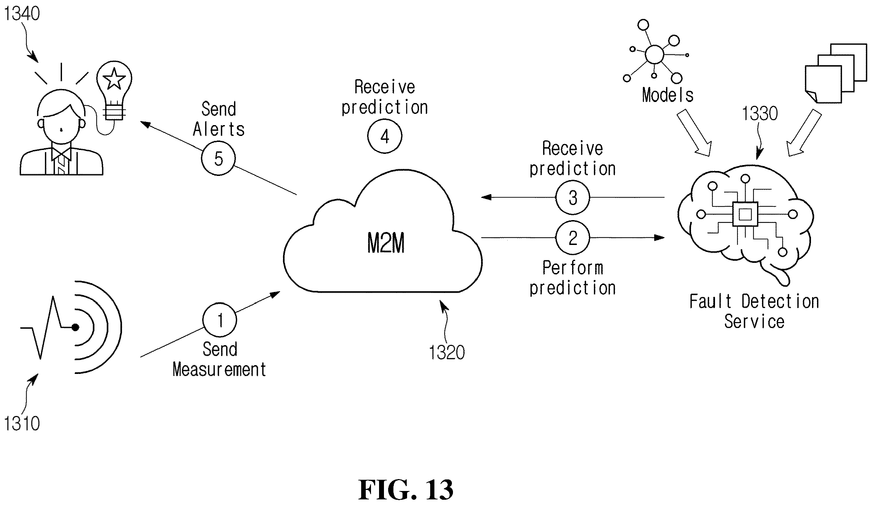

FIG. 13 illustrates a fault detection scenario using an artificial intelligence model in an M2M system according to the present disclosure. Referring to FIG. 13, a sensor 1310 sends a measurement value to an M2M platform 1320, and the M2M platform 1320 acquires a prediction result using a fault detection service server 1330. The M2M platform 1320 may calculate a deviation, and when determining a fault, send an alert to a user 1340.

Fault detection is directed to identify defective states and conditions based on measurements from field devices by using an IoT system. In the scenario illustrated in FIG. 13, an IoT module may be designed for fault detection and isolation in a smart building environment by using a rule-based and self-learning fault detection algorithm. Thus, malfunctions may be detected in real time.

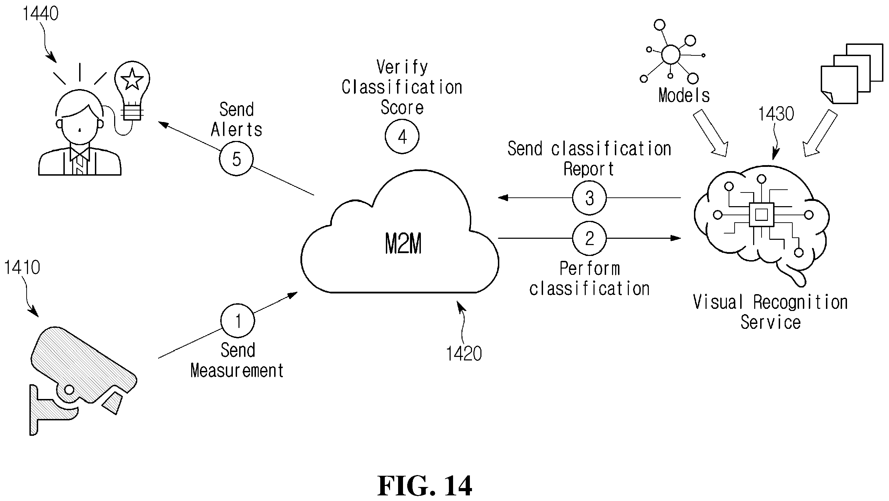

FIG. 14 illustrates a pattern detection scenario from a video in an M2M system according to the present disclosure. Referring to FIG. 14, a camera 1410 sends a measurement result (for example, a captured image) to an M2M platform 1420, and the M2M platform 1420 acquires a prediction result using a visual recognition service server 1430. The M2M platform 1420 may verify a classification score, and when determining that a specific pattern is detected, send an alert to a user 1440. In the scenario illustrated in FIG. 14, an IoT module performs image classification using machine learning and trained data. The camera 1410 periodically reads images from a data storage and pushes the images to the M2M platform. When an object belonging to a categories trained in the images is recognized, notification is generated.

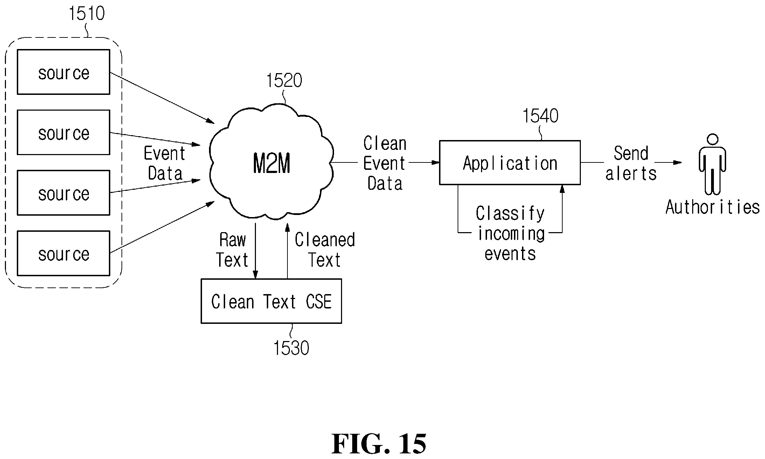

FIG. 15 illustrates a language based sentiment classification scenario in an M2M system according to the present disclosure. Referring to FIG. 15, event data generated from various sources 1510 is provided to an M2M platform 1520. The M2M platform 1520 converts a raw text to a cleaned text through a CSE 1530 and provides cleaned event data to an application 1540.

IoT data may have various forms including numerals and characters. The scenario illustrated in FIG. 15 is directed to process text-type data in a smart cities context. This scenario relates to detecting the occurrence and location of a disaster through analysis of text data crowdsourced from a social network or a specific mobile application.

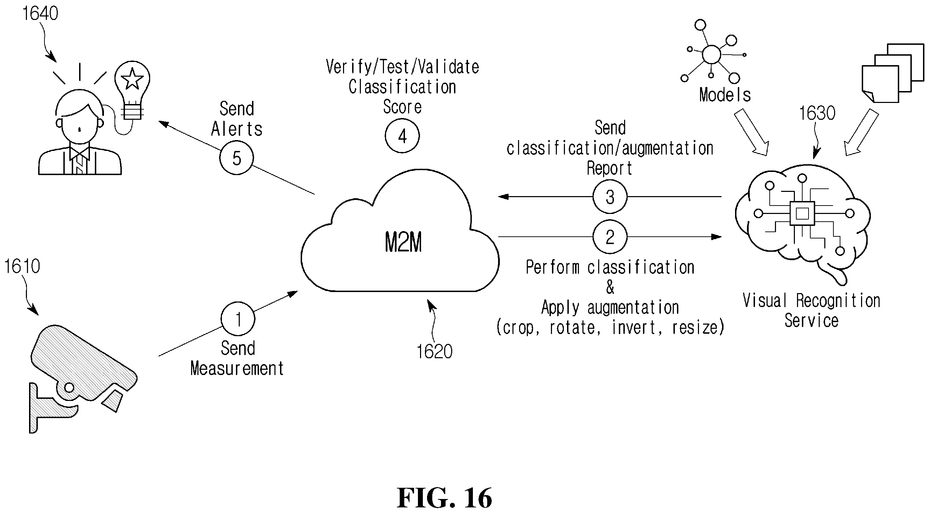

FIG. 16 illustrates an image classification and augmentation scenario in an M2M system according to the present disclosure. In the scenario illustrated in FIG. 16, an IoT module may be designed to perform image classification using machine learning and trained data. Referring to FIG. 16, a camera 1610 periodically reads images from a disk and pushes the images to an M2M platform 1620. The M2M platform 1620 may include a CSF including classifiers trained for recognition of things, tracking of things, segmentation, and the like. For example, there may be a custom classifier CSF, an image classifier CSF, and the like. The CSFs may enable an application to be trained to generate its classifier and implement specific visual recognition. The M2M platform 1620 acquires classification and augmentation results using a visual recognition service server 1630 and verify and test classification scores. When necessary, the M2M platform 1620 may send an alert to a user 1640.

The above-described exemplary embodiments of the present disclosure may be implemented by various means. For example, the exemplary embodiments of the present disclosure may be implemented by hardware, firmware, software, or a combination thereof.

The foregoing description of the exemplary embodiments of the present disclosure has been presented for those skilled in the art to implement and perform the disclosure. While the foregoing description has been presented with reference to the preferred embodiments of the present disclosure, it will be apparent to those skilled in the art that various modifications and variations can be made in the present disclosure without departing from the spirit or scope of the present disclosure as defined by the following claims.

Accordingly, the present disclosure is not intended to be limited to the exemplary embodiments shown herein but is to be accorded the widest scope consistent with the principles and novel features disclosed herein. In addition, while the exemplary embodiments of the present specification have been particularly shown and described, it is to be understood that the present specification is not limited to the above-described exemplary embodiments, but, on the contrary, it will be understood by those skilled in the art that various changes and modifications may be made without departing from the spirit and scope of the present specification as defined by the claims below, and such changes and modifications should not be individually understood from the technical thought and outlook of the present specification.

In this specification, both the disclosure and the method disclosure are explained, and the description of both disclosures may be supplemented as necessary. In addition, the present disclosure has been described with reference to exemplary embodiments thereof. It will be understood by those skilled in the art that various changes in form and details may be made therein without departing from the essential characteristics of the present disclosure. Therefore, the disclosed exemplary embodiments should be considered in an illustrative sense rather than in a restrictive sense. The scope of the present disclosure is defined by the appended claims rather than by the foregoing description, and all differences within the scope of equivalents thereof should be construed as being included in the present disclosure.

## Claims

1. A method for operating a first device in a machine-to-machine (M2M) system, the method comprising:
transmitting a first message for requesting to generate a resource associated with training of an artificial intelligence model to a second device;
transmitting a second message for requesting to perform the training based on the resource to the second device;
receiving a third message for notifying completion of the training of the artificial intelligence model from the second device; and
performing a predicting operation using the trained artificial intelligence model.

2. The method of claim 1, wherein the resource includes at least one of an attribute for information on resources storing learning data for the training, an attribute for information on a per-tuple ratio of the learning data, an attribute for information on the artificial intelligence model, information on a parameter used in the artificial intelligence model, an attribute for storing the trained artificial intelligence model, and an attribute for information for triggering to build the artificial intelligence model.

3. The method of claim 1, further comprising downloading software generated to use the artificial intelligence model from the second device.

4. The method of claim 1, wherein the performing of the predicting operation using the trained artificial intelligence model comprises:
transmitting input data to be input into the trained artificial intelligence model to the second device; and
receiving a result predicted from the input data from the second device.

5. The method of claim 1, wherein the third message includes at least one of information indicating the completion of the training of the artificial intelligence model and information indicating performance of the trained artificial intelligence model.

6. A method for operating a second device in a machine-to-machine (M2M) system, the method comprising:
receiving a first message for requesting to generate a resource associated with training of an artificial intelligence model from a first device;
receiving a second message for requesting to perform the training based on the resource from the first device;
transmitting a third message for requesting to build the artificial intelligence model to the third device; and
assisting a predicting operation using the artificial intelligence model.

7. The method of claim 6, wherein the resource includes at least one of an attribute for information on resources storing learning data for the training, an attribute for information on a per-tuple ratio of the learning data, an attribute for information on the artificial intelligence model, information on a parameter used in the artificial intelligence model, an attribute for storing the trained artificial intelligence model, and an attribute for information for triggering to build the artificial intelligence model.

8. The method of claim 6, wherein the assisting of the predicting operation comprises providing software generated to use the artificial intelligence model to the first device.

9. The method of claim 6, wherein the assisting of the predicting operation comprises:
transmitting input data to be input into the trained artificial intelligence model to the second device; and
receiving a result predicted from the input data from the second device.

10. The method of claim 6, wherein the third message includes at least one of information indicating the artificial intelligence model, information necessary for the training of the artificial intelligence model, information on learning data for the training, and information necessary for accessing the learning data.

11. The method of claim 6, further comprising:
receiving a fourth message including information on the trained artificial intelligence model from the third device; and
transmitting a fifth message for notifying completion of the training of the artificial intelligence model to the first device.

12. A method for operating a third device in a machine-to-machine (M2M) system, the method comprising:
receiving a first message for requesting to build an artificial intelligence model to be used in a first device from a second device;
generating the artificial intelligence model;
performing training for the artificial intelligence model; and
transmitting a second message including information on the trained artificial intelligence model to the second device.

13. The method of claim 12, wherein the first message includes at least one of information indicating the artificial intelligence model, information necessary for the training of the artificial intelligence model, information on learning data for the training, and information necessary for accessing the learning data.

14. The method of claim 12, wherein the second message includes an updated weight value of at least one connection constituting the trained artificial intelligence model.
